# EUROPEAN PATENT SPECIFICATION

(11) **EP 0 539 386 B1**
(45) Date of publication and mention of the grant of the patent: **23.10.1996**
(21) Application number: 91910565.0
(22) Date of filing: 16.05.1991
(51) Int. Cl.: B29C 45/00, B29C 45/34, B29C 45/76, B29D 22/00

(54) **METHOD AND SYSTEM FOR THE INJECTION MOLDING OF PLASTIC ARTICLES UTILIZING A FLUID COMPRESSION UNIT**
VERFAHREN UND SYSTEM ZUM SPRITZGIESSEN VON KUNSTSTOFFGEGENSTÄNDEN UNTER VERWENDUNG EINER EINHEIT ZUR FLUIDUMKOMPRESSION
PROCEDE ET SYSTEME POUR LE MOULAGE PAR INJECTION D'ARTICLES EN PLASTIQUE A L'AIDE D'UNE UNITE DE COMPRESSION PAR FLUIDE

(30) Priority: 16.07.1990 US 552909; 28.03.1991 US 674997
(43) Date of publication of application: 05.05.1993
(73) Proprietor: Melea Limited, Gibraltar (GI)
(72) Inventor: HENDRY, James, W., Brooksville, FL 34609 (US)
(74) Representative: Rehders, Jochen, Dipl.-Ing.
(86) International application number: US9103433
(87) International publication number: WO9201545

(56) References cited:
- EP-A- 0 298 635
- GB-A- 2 232 632
- US-A- 4 935 191
- US-A- 5 015 166
- US-A- 5 039 463
- PLASTVERARBEITER no. 40, January 1989, SPEYER - DE pages 14 - 18 H. ECKARDT ET AL. 'Airmould-Verfahren, Teil 1'

## Description

### Technical Field

This application related to method and systems for injection molding of plastic articles using fluid pressure and, in particular, to method and systems for the injection molding of plastic articles using fluid pressure to assist in the making of plastic articles.

### Background Art

It is known in the plastic molding art to use pressurized fluid in conjunction with the plastic molding of articles, as disclosed in the United States Patent to Friederich 4 101 617.

Gas-assisted injection molding is a thermoplastic molding process which provides stress-free large parts with a class A surface and virtually no sink marks. Gas-assisted injection molding is a low-pressure molding process compared to conventional injection molding. In this process, inert gas is injected into the plastic after it enters the mold. The gas does not mix with the plastic but remains in the middle of the thicker sections of the molding. By controlling the gas pressure, the quantity of plastic injected into the mold (short shot) and the rate of gas flow, a predetermined network of hollow interconnecting channels is formed within the molded part. The gas pressure remains constant in the network of hollow channels throughout the molding. This compensates for the tendency of the plastic to shrink at the thicker areas of the molding preventing warpage and reducing stress. The gas pressure is relieved just prior to opening the mold. Because of the relatively low injection pressure, large parts can be molded with substantial reductions in clamp tonnage.

The gas system equipment provides the precise control of pressure, timing and volume of gas which is injected into the part, all of which are important to the control of the gas-assisted injection process.

In US-Patent No. 4 948 547 entitled "Improved Method for the Use of Gas Assistance in the Molding of Thermoplastic Articles", assigned to the Assignee of the present invention, a method of gas-assisted injection molding is disclosed in which a charge of pressurized gas is injected into the mold but not into the article-defining cavity. The gas charge is of a predetermined quantity and pressure, sufficient to assist in filling out the article defining cavity with resin and promoting surface quality.

US-Patent No. 4 935 191 discloses a process for producing an injection molded product including introducing a stream of plastic material into a mold space at a first pressure. A quantity of gas is stored in a storage chamber at a second pressure which is at least as high as the first pressure. The gas is introduced into the molten stream of plastic material immediatly after the molten material has passed the position at which the gas is introduced, thereby forming a gas cavity in the molten material.

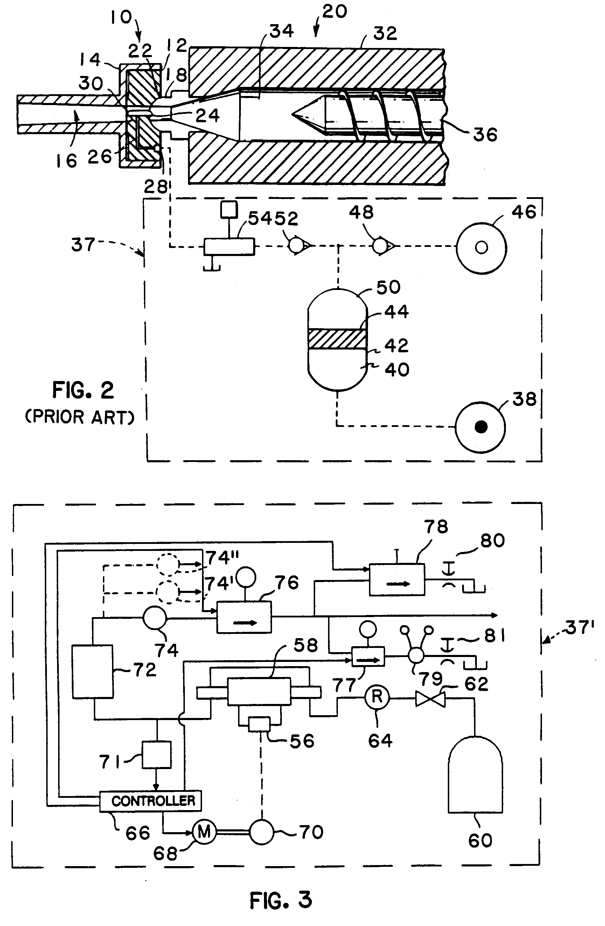

Figure 2 is a general schematic view of a prior art apparatus suited for practicing plastic injection molding, generally of the type to which the present invention is directed.

The controlled entry of pressurized fluid, typically nitrogen gas, is accomplished by the use of a modified mold sprue 10. The sprue 10 includes a disc-shaped insert 12 disposed within a sprue body 14.

The mold sprue 10 cooperates with a conventional plastic injection molding machine 20, the nozzle 18 of the molding machine 20 mates with a concave surface 22 on the face of the insert to provide a continuous path 16 for the flow of plastic from the machine 20 through the sprue 10 and into a mold cavity (not shown).

The flow of molten plastic through the insert 10 may be diverted by a conventional torpedo 24 of the type well known in the art.

The introduction of pressurized fluid into the flow path is through passage segments 26 and 28 formed (by drilling or the like) in the insert. The passage 26 opens into the flow path through an orifice 30 of sufficiently small dimension, for example, 0,125 to 1,015 mm, (0,005 to 0,040 inches), depending on the viscosity of the plastic to actively prevent entry of the relatively high viscous molten plastic during injection.

The plastic injection molding machine 20 includes a barrel 32 with a central cylindrical opening 34. A screw 36 serves to plasticize and advance resin toward the nozzle area. Upon complete plasticization of the resin, the screw 36 is hydraulically advanced toward the head of the barrel 32 to inject molten plastic through the nozzle 18. The plastic passes through the sprue insert 12 at a nominal plastic injection pressure through the stroke of the screw 36. This pressure falls upon substantial completion of the stroke and discharge of the plastic from the barrel 32 of the molding machine 20.

The insert 12 is shown mounted concentrically in a recess in the sprue body 14. Molten plastic passes from the nozzle 18 and around the torpedo through a pair of kidney-shaped apertures (not shown) which serves as first and second branches in the flow path. The pressurized fluid is communicated to the plastic flow path through passage segment 26 and orifice 30 which is mediate the plastic flow branches and colinear therewith.

The temperature of the insert 12 can be controlled, depending on the processing specification of the plastic being used by employing electrical heater bands or other types of auxiliary heat sources, as is well known in the art.

The apparatus of Figure 2 also includes a mechanism 37 for charging and communicating the pressurized fluid or gas to the sprue insert 12. For example, a hydraulic fluid supply 38 directs a working fluid, such as oil under pressure to a chamber 40 of an accumulator 42 effectively separated into two chambers, having mutually and inversely variable volumes by a compression piston 44. Such an accumulator is described in European Patent Application 0 298 635 for example. A fluid supply 46 is provided for directing a charge of gas through a first check valve 48 into the second chamber 50 of the accumulator 42 for pressurization. A control valve 54 controls communication of the gas from the chamber 50 to the sprue insert 12. A check valve 52 is connected in series with the control valve 54.

The mechanism for charging a pressurized fluid or gas for use in the prior art molding process is described in greater detail in United States Patent No. 4 855 094. Also, a detailed description of the operation of the mechanism 37 is described in this patent which is assigned to the Assignee of the present application.

One limitation of the prior art mechanism 37 is that the hydraulic unit can only recharge after the plastic injection molding cycle is substantially completed (typically 75%). Also, such a hydraulic unit must be recharged after each cycle. Consequently, a relatively constant pressure is not always available with such a hydraulic unit which uses a multiplier system.

Another drawback of such a hydraulic unit is that it is not flexible to adapt to more than one concurrently operating molding process. Consequently, a separate hydraulic unit must be provided for each injection molding machine and mold combination.

### Disclosure of the Invention

An object of the present invention is to provide a method and system for the injection molding of plastic articles wherein charges of fluid can be pressurized at any time during an injection molding process.

Another object of the present invention is to provide a method and system for the injection molding of plastic articles wherein it is not required that fluid charge means for pressurizing charges of fluid need not be recharged for each injection molding cycle.

Yet still another object of the present invention is to provide a method and system for the injection molding of plastic articles wherein a fluid, having a relatively constant pressure, is always available during the injection molding process.

Yet still further another object of the present invention is to provide a method and system for the injection molding of plastic articles wherein a fluid charge means and fluid receiver means are adapted to run more than one injection molding system with a minimum amount of adaptation.

In carrying out the above objects and other objects of the present invention, a method for the injection molding of plastic articles in an injection molding system is provided. The injection molding system includes a resin injection nozzle and a mold having an injection aperture and a mold cavity for receiving molten resin from the nozzle. The method includes the steps of pressurizing a charge of fluid, storing the charge of pressurized fluid within a fluid receiver means at a level within a predetermined range of pressures and injecting a quantity of molten plastic from the injection nozzle through the injection aperture and into the mold cavity. The method further includes the steps of communicating the pressurized fluid from the fluid receiver means to an orifice in communication with the mold cavity simultaneously with or after the step of injecting. Also, the fluid is contained under pressure within the mold until the article has set up in the mold cavity, after which the fluid is vented from the mold. Finally, the steps of injecting, communicating, containing and venting are repeated until the pressure within the fluid receiver means is below the range of pressure at which time the steps of pressurizing and storing are repeated in preparation for molding another article. Finally, the method further comprises the step of reducing the pressure of the fluid from the fluid receiver means to an acceptable level for molding the articles during the step of communicating.

Further in carrying out the above objects and other objects of the present invention, an injection molding system for the injection molding of plastic articles is provided. The system includes an injection molding machine including an injection nozzle for injecting molten plastic through the nozzle and a mold having a resin injection aperture and a mold cavity for receiving molten plastic from the nozzle. The system further includes fluid charge means for pressurizing charges of fluid and fluid receiver means for storing a first charge of pressurized fluid at a pressure level within a predetermined range of pressure. The system further includes fluid circuit means interconnecting the fluid receiver means to an orifice in communication with the mold cavity for introducing the fluid into the mold simultaneously with or after plastic injection, the fluid circuit means including at least one fluid pressure reducing means for reducing the pressure of the fluid from the fluid receiver means to the orifice to an acceptable level for molding the articles. Finally, the system includes control means for causing the fluid charge to pressurize a second charge of fluid as soon as the pressure within the fluid receiver means falls below the range of pressures. The fluid receiver means stores the second charge of fluid so that the pressure of the fluid within the fluid receiver means is within the range of pressures in preparation for molding another article.

Preferably the system also includes at least one fluid pressure reducing means for reducing the pressure of the fluid from the fluid receiver means to the orifice to an acceptable level for molding the articles. The fluid pressure reducing means is typically a fluid pressure reducing mechanism, such as a pressure reducing valve. A plurality of such pressure reducing valves may be provided in order that the charging and communicating system is capable of running a plurality of injection molding machines and their associated molds.

Preferably, the method also includes the step of reducing the pressure of the fluid from the fluid receiver means to an acceptable level for molding of articles during the step of communicating. This method step is typically performed by a fluid pressure reducing mechanism, such as a pressure reducing valve. A plurality of such pressure reducing valves may be provided in order that the charging and communicating system is capable of running of plurality of injection molding machines and their associated molds.

The objects, features and advantages of the present invention are readly apparent from the following detailed description of the best mode for carrying out the invention when taken in connection with the accompanying drawings.

### Brief Description of the Drawings

Figure 1 is a flowchart setting forth the operational steps of the method of the present invention;
Figure 2 is a general schematic view of a system constructed in accordance with the prior art;
Figure 3 is a general schematic view of a mechanism for charging and communicating pressurized fluid or gas to replace the mechanism illustrated in Figure 2 to obtain the system of the present invention.

### Best Mode for carrying out the Invention

The present invention will be first described by reference to the operational steps of the method. Then, the system employed in the preferred embodiment will be described.

### General Method of Operation

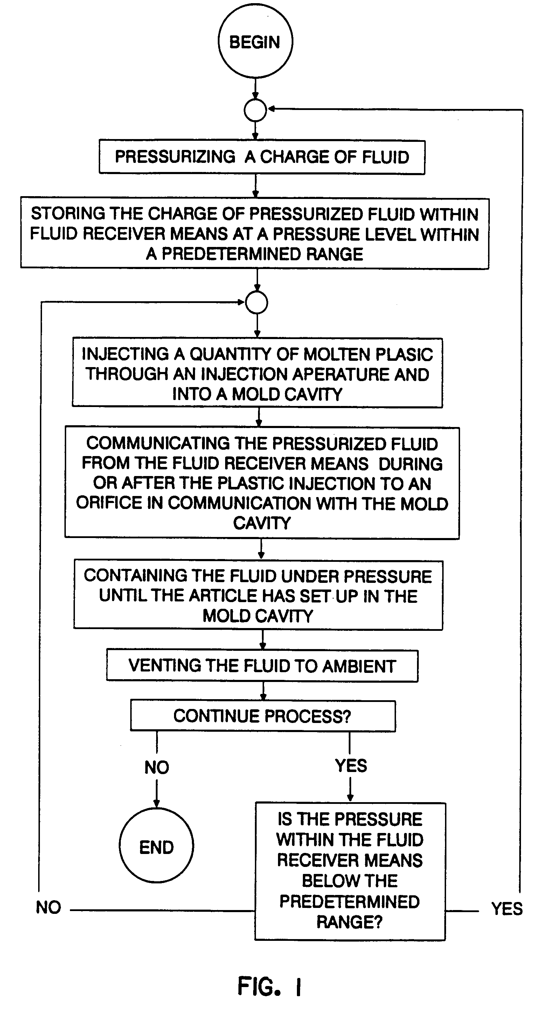

Figure 1 is a flowchart setting forth the general operational steps involved in the method of the present invention. In overview, the method provides for molding of plastic articles with hollow interior sections where pressurized fluid is present in formation of the article in the mold cavity. The presence of the pressurized fluid creates an outward pressure which minimizes sink marks and reduces the material requirements and weight of the molded article. However, it is to be understood that the method is capable of providing for the molding of plastic articles with solid interior where pressurized fluid is injected into the mold but not into the article-defining cavity. The gas charge is of predetermined quantity and pressure sufficient to assist in filling out the article-defining cavity with resin and promoting surface quality as described in greater detail in US-Patent No. 4 948 547, entitled "Method for the Use of Gas Assistance in the Molding of Plastic Articles".

In step 1, a charge of fluid is pressurized or boosted to a predetermined pressure level.

In step 2, the charge of pressurized fluid is stored within a fluid receiver means or mechanism at a level within a predetermined range of pressures. This pressure may be reduced to the pressure required by the injection molding process.

In step 3, a quantity of molten plastic is injected from the nozzle of a conventional injection molding machine to a flow path into a mold cavity at an injection pressure. The quantity of molten plastic, i. e. the plastic shot, is less than the quantity of plastic which would ordinarily be required to fill the mold cavity if a hollow article is to be filled.

In step 4, the charge of pressurized fluid, preferably nitrogen gas, is communicated from the fluid receiver means during or after the plastic injection, to an orifice in communication with the mold cavity. Preferably, the orifice has a sufficiently small dimension to resist entry to the relatively viscous molten plastic.

In step 5, the pressurized gas is contained under pressure within the mold, until the article has set up in the mold cavity. During the formation of hollow plastic articles, the pressurized gas exerts outward pressure which forces the plastic to conform to the detail of the mold surface and exhibit fine detail with minimal sink marks or other surface defects. Preferably, a relatively low holding pressure is maintained in the mold to prevent a turbulent venting of the gas to ambient.

In step 6, the gas is vented from the mold to ambient or to a gas holding tank for reuse prior to opening the mold and removing the finished molded article.

In step 7, a decision must be made whether the injection molding process is to be continued.

In step 8, if the process is to continue, it is determined whether the pressure within the fluid receiver means is below the predetermined range. If it is, the process is continued at step 1 to begin pressurizing a second charge of gas. If the pressure within the fluid receiver means is still within the predetermined range, the process continues at step 3 wherein another quantity of molten plastic is injected from the nozzle into the injection aperture and into the mold cavity. At this point there is no need to pressure a second charge of gas since the pressure of the gas within the fluid receiver means is sufficient to mold another plastic article.

### Description of the System

Referring now to Figure 3, there is illustrated a mechanism 37' for charging and communicating pressurized fluid or gas to the sprue insert 12 and which replaces the mechanism 37 of Figure 2.

A pneumatic air supply 56 directs a working fluid, such as air under pressure to a compartment (not shown) of a gas booster 58 effectively separated into first and second chambers. The first chamber receives the working gas and pressurizes the charge of fluid in the second chamber.

A gas supply 60 is provided for directing a charge of gas to a check valve 62 and regulated by a pressure regulator 64 into the second chamber of the gas booster 58 for pressurization.

The operation of the gas booster 58 is controlled by a controller 66 which controls the operation of a motor 68 to drive a pump 70 to provide pressurized gas to the air supply 56. In turn, the pressurized gas from the air supply 56 boosts the pressure of the fluid charge within the gas booster 58 to a predetermined pressure range set by a pressure switch 71 coupled to the controller 66. The pressurized gas is stored in a gas or air pressure receiver 72 which preferably has a 976 bar (14.000 psi) capacity. Once the charge of fluid is pressurized to the pressure range setting of the pressure switch 71 by the booster 58, the booster 58 will stop under control of the controller 66.

The pressure of the gas from the pressure receiver 72 can be reduced to the proper pressure needed by the injection molding process by adjusting a pressure reducing valve 74. The valve 74 reduces the 976 bar (14.000 psi) to a value needed for the article or molding i. e. 70 bar (1.000 psi) to 560 bar (8.000 psi) and preferably 175 to 245 bar (2.500 to 3.500 psi) depending on the plastic used for the article.

When the pressurized gas is needed for the injection molding process, a directional control valve 76 which had previously retained the gas within the gas receiver 72, is energized under control of the controller 66 and is open long enough to communicate and direct the gas within the pressure gas receiver 72 through the passages 26 and 28 and insert 12 as shown in Figure 2 to the injection orifice 30.

When a sufficient amount of gas has been communicated from the gas receiver 72, the directional control valve 76 is deenergized.

Gas directional valve 77 under control of the controller 66 allows gas in the article to flow to a pressure reducing valve 79 to allow a low holding pressure in the molding i. e. just enough pressure to complete the molding and hold the thick sections from sinking.

A manual throttle valve 81 controls the rate of gas coming out of the molding. This eliminates fast turbulent venting of the gas from the molding or article.

After the fluid has been contained under pressure to allow the article to set up in the mold cavity, the fluid is vented to ambient or to a reservoir or tank by energizing a directional control valve 78 to open the valve 78. The gas from the mold is controlled at a metered rate by the manual gas throttle valve 80 so that the gas pressure doesn't go down to atmospheric pressure too fast. Thereafter, the directional control valve 78 is closed and the completed article is ejected from the mold.

Alternatively, the fluid may be vented to ambient by separating the mold and the injection nozzle 18 after the molten resin has cooled beneath its softening point.

The pneumatic mechanism 37' can be adapted to run more than one gas-assisted injection molding process and apparatus by adding a plurality of fluid pressure reducing valves 74' and 74'' which, in turn, would be connected to their respective directional control valves and other valves in the same fashion as the pressure reducing valve 74 is connected to its respective directional control valves 76, 77 and 78 and other valves. The additional pressure reducing valves may have different pressure settings to accommodate fluids of differing pressures. Prior art hydraulic units are not as flexible and would be difficult to adapt to more than one injection molding machine or mold pair.

When the pressure in the gas receiver 72 drops below the low setting of the pressure switch 71 the booster 58 starts again recharging the gas receiver 72 until the setting of the pressure switch 71 is again reached.

While the present invention could be practiced without valves 80 and 81 it is preferable to use valves 80 and 81. Gas being decompressed rapidly from 560 bar (8.000 psi) to 280 to 420 bar (4.000 to 6.000 psi) is quite an explosion and particles of plastic or other material could get airborne and plug the tubing or valves.

### Sequence of Operations

(1) Receiver 72 is charged to the pressure setting of the switch 71.
(2) When plastic is flowing into the cavity at a preselected point the valve 76 is energized. This allows the gas to go to the molding at the pressure setting of valve 74.
(3) When the gas breaks through into the molding the valve 76 is de-energized and the valve 77 is energized. This allows the gas pressure to decay down to the pressure setting of the valve 79. This is a controlled decay through the valve 81. The gas pressure is also influenced by the gas entering the molding and completing its task of filling out the part and preventing shringkage.
(4) After an interval of time, i. e. enough to make the molding self-supporting, the valve 78 is energized which allows the remaining pressure in the molding to be reduced to a safe value so the mold can be opened and the part will not explode, this pressure could be atmospheric up to 3 or 4 atmospheres. The manual valve 80 controls the rate of venting.
(5) Reset and start over.

The advantages accruing to the use of the pneumatic gas compression unit 37' are numerous. For example, the booster 58 can be in operation at any time during an injection molding process cycle. This is to be contrasted with the prior art hydraulic units wherein they are rechargeable only after the injection molding process is substantially through its cycle (i. e. 75 %).

Also, the mechanism or unit 37' typically need not be recharged for several injection molding cycles. This is to be contrasted with a hydraulic unit, such as the unit 37, which must be recharged after each injection molding cycle.

Also, the mechanism or unit 37' is always available with a relatively constant pressure within a predetermined range of pressures wherein this is not necessarily so with a hydraulic unit (i. e. having a hydraulic multiplier system).

Also, a timer may be provided to time the relationship of plastic/gas injection to eliminate a "hesitation mark" in the plastic.

The invention has been described in an illustrative manner and, it is to be understood that the terminology which has been used is intended to be in the nature of words of description rather than of limitation.

Obviously, many modifications and variations of the present invention are possible in light of the above teachings. It is therefore to be understood that, within the scope of the appended claims, the invention may be practiced otherwise than as specifically described.

## Claims

1. A method for the injection molding of plastic articles in an injection molding system including a resin injection nozzle and a mold having an injection aperture and a mold cavity for receiving molten resin from the nozzle, the method comprising the steps of:
(a) pressurizing a charge of fluid;
(b) storing the charge of pressurized fluid within a fluid receiver means at a pressure level within a predetermined range of pressure;
(c) injecting a quantity of molten plastic from the injection nozzle through the injection aperture and into the mold cavity;
(d) communicating the pressurized fluid from the fluid receiver means to an orifice in communication with the mold cavity simultaneously with or after the step of injecting;
(e) containing the fluid under pressure within the mold until the article is set up in the mold cavity;
(f) venting the fluid from the mold;
(g) repeating steps (c) through (f) until the pressure within the fluid receiver means falls below the range of pressure; and
(h) repeating steps (a) and (b) as soon as the pressure within the fluid receiver falls below the range of pressures in preparation for molding another article and wherein the method further comprises the step of reducing the pressure of the fluid from the fluid receiver means to an acceptable level for molding the articles during the step of communicating.

2. The method of claim 2 wherein the fluid is a gas.

3. The method of claim 1 wherein the mold includes a sprue, the sprue having the injection aperture and wherein the charge of pressurized fluid is introduced to the mold cavity from the sprue.

4. The method of claim 1 further comprising the step of reducing the pressure of the fluid in the mold to an acceptable level during the step of containing so that the article can set up in the mold cavity without sinking.

5. The method of claims 1 or 4 wherein the fluid is vented from the article through the same orifice as which it was introduced.

6. The method of claim 1 wherein the step of venting includes the step of separating the mold and the injection nozzle after the molten resin has cooled beneath its softening point.

7. An injection molding system for the injection molding of plastic articles comprising:
an injection molding machine (20) including an injection nozzle (18) for injecting molten plastic through the nozzle;
a mold having a resin injection aperture (30) and a mold cavity for receiving the molten plastic from the nozzle;
fluid charge means (56, 58; 68, 70) for pressurizing charges of fluid;
fluid receiver means (72) for storing a first charge of pressurized fluid at a pressure level within a predetermined range of pressures;
fluid circuit means (12, 26, 28, 74, 76, 77, 78, 79) interconnecting the fluid receiver means (72) to an orifice (26) in communication with the mold cavity for introducing the fluid into the mold simultaneously with or after plastic injection, wherein the fluid circuit means (12, 26, 28, 74, 76, 77, 78, 79) includes at least one fluid reducing means (74) for reducing the pressure of the fluid from the fluid receiver means (72) to the orifice (26) to an acceptable level for molding the article; and
control means (66) for causing the fluid charge means (56, 58; 68, 70) to pressurize a second charge of fluid as soon as the pressure within the fluid receiver means (72) falls below the range of pressures, said fluid receiver means (72) storing the second charge of fluid so that the pressure of the fluid within the fluid receiver means (72) is within the range of pressures in preparation for molding another article.

8. The system of claim 7 wherein the fluid circuit means (12, 26, 28, 74, 76, 77, 78, 79) further includes fluid pressure reducing means (79) for reducing the pressure of the fluid in the mold to an acceptable level so that the article can set up in the mold cavity without sinking.

9. The system of claim 8 wherein the fluid circuit means (12, 26, 28, 74, 76, 77, 78, 79) further includes fluid venting means (78) for venting the fluid to ambient.

10. The system of claim 7 wherein the fluid charge (56, 58, 68, 70) includes a fluid booster (58) for receiving the first and second charges.

11. The system of claim 10 wherein the fluid booster (58) receives a working gas to pressurize the charges of fluid.

12. The system of claim 11 wherein the control means (66) regulates the pressure in the fluid booster (58) in a controlled sequence.

13. The system of claim 7 wherein at least part (12, 26, 28) of the fluid circuit means (12, 26, 28, 74, 76, 77, 78, 79) is contained within the mold.

14. The system of claim 13 wherein the mold includes a sprue (10), the sprue (10) having the injection aperture (30) and wherein the fluid circuit means (12, 26, 28) is contained within the sprue (10).

15. The system of claim 14 wherein the sprue (10) includes a bushing (12) having the orifice (26) and wherein the injection nozzle (18) communicates with the bushing (12) and the pressurized fluid is communicated to the orifice (3, 26) in the bushing (12).

16. The system of claim 15 wherein the orifice (26) is dimensioned to be sufficiently small to substantially resist entry of molten plastic.

17. The system of one or more of claims 7 to 16 comprising:
a plurality of injection molding machines (20), each of the machines (20) including an injection nozzle (18) for injecting molten plastic through the nozzle (18);
a like plurality of molds, each of the molds having an resin injection aperture (30) and a mold cavity for receiving the molten plastic from its nozzle (18);
fluid circuit means (12, 26, 28, 74, 74', 74'', 76, 77, 78, 79) interconnecting the fluid receiver means (72) to a like plurality of orifices (26) each of the orifices being (26) in communication with its respective mold cavity for introducing the pressurized fluid into its respective mold simultaneously with or after plastic injection;
a like plurality of fluid pressure reducing means (74, 74', 74'') connected to the fluid receiver means (72) for reducing the pressure of the fluid from the fluid receiver means (72) to an acceptable level for molding articles within its respective mold; and
control means (66) for causing the fluid charge means (56, 58; 68, 70) to pressurize the second charge of fluid as soon as the pressure within the fluid receiver means (72) falls below the range of pressures, said fluid receiver means (72) storing the second charge of fluid so that the pressure of the fluid within the fluid receiver means (72) is within the range of pressures in preparation for molding additional articles.

## Patentansprüche

1. Verfahren zum Spritzgießen von Kunststoffgegenständen in einem Spritzgießsystem mit einer Harzeinspritzdüse und einer Form mit einer Einspritzöffnung und einem Formhohlraum zur Aufnahme von geschmolzenem Harz aus der Düse, mit den Schritten:
a) Unterdrucksetzen eines Fluids;
b) Speichern einer unter Druck gesetzten Fluidladung in einem Fluidspeicher mit einer Druckhöhe innerhalb eines vorgegebenen Druckbereichs;
c) Einspritzen einer geschmolzenen Kunststoffmenge von Einspritzdüse durch die Einspritzöffnung in den Formhohlraum;
d) Zuführen des unter Druck gesetzten Fluids vom Fluidspeicher zu einer Öffnung in Verbindung mit dem Formhohlraum gleichzeitig mit oder nach dem Schritt des Einspritzens;
e) Halten des Fluids unter Druck innerhalb der Form bis sich der Gegenstand im Formhohlraum verfestigt hat
f) Ablassen des Fluids aus der Form;
g) Wiederholen der Schritte c) bis f) bis der Druck innerhalb des Fluidspeichers unterhalb des Druckbereichs absinkt; und
h) Wiederholen der Schritte a) und b), sobald der Druck im Fluidspeicher unterhalb des Druckbereichs absinkt, zur Vorbereitung des Formens eines wei teren Gegenstandes, wobei das Verfahren des weiteren den Schritt umfaßt, Her absetzen des Fluiddrucks aus dem Fluidspeicher auf eine annehmbare Höhe zum Formen des Gegenstandes während des Schrittes des Zuführens.

2. Verfahren nach Anspruch 1, bei dem das Fluid ein Gas ist.

3. Verfahren nach Anspruch 1, bei dem die Form einen Anguß aufweist und der Anguß mit einer Einspritzöffnung versehen ist, wobei die Ladung des unter Druck gesetzten Fluids in den Formhohlraum vom Anguß eingebracht wird.

4. Verfahren nach Anspruch 1, mit dem zusätzlichen Schritt: Herabsetzen des Fluiddrucks in der Form auf eine annehmbare Höhe, während des Schritts des Haltens, so daß sich der Gegenstand im Formhohlraum verfestigen kann, ohne ein zufallen.

5. Verfahren nach Anspruch 1 oder 4, bei dem das Fluid aus dem Gegenstand durch dieselbe Öffnung entweicht, durch die es eingeführt wurde.

6. Verfahren nach Anspruch 1, bei dem der Schritt des Herausführens den Schritt des Trennens der Einspritzdüse von der Form umfaßt, nachdem sich das geschmolzene Harz auf unterhalb seines Erweichungspunkts abgekühlt hat.

7. Spritzgießsystem zum Spritzgießen von Kunststoffgegenständen mit
- eine Spritzgießmaschine (20), die eine Einspritzdüse (18) zum Einspritzen von geschmolzenen Kunststoff durch die Düse aufweist;
- einer Form, die eine Harzeinspritzöffnung (30) und einen Formhohlraum aufweist, zur Aufnahme von geschmolzenen Kunststoff von der Düse her;
- Fluiddruckerzeugungsmittel (56, 58; 68, 70), um Fluidladungen unter Druck zu setzen,
- Fluidspeicher (70) zum Speichern einer ersten Ladung von unter Druck gesetztem Fluid auf einer Druckhöhe innerhalb eines vorgegebenen Druckbereichs;
- Fluidschaltmittel (12, 26, 28, 74, 76, 77, 78, 79), den Fluidspeicher (72) mit einer Öffnung (26), die in Verbindung mit dem Formhohlraum zum Einbringen des Fluids in die Form gleichzeitig mit oder nach dem Einspritzen des Kunststoffs verbindet, wobei die Fluidschaltmittel (12, 26, 28, 74, 76, 77, 78, 79) wenigstens eine Fluiddruckmindervorrichtung (74) zum Herabsetzen des Fluiddrucks von dem Fluidspeicher (72) zur Öffnung (26) auf eine annehmbare Höhe zum Formen des Gegenstandes ; und
- Steuermittel (66), die die Fluiddruckerzeugungsmittel (56, 58; 68, 70) veranlassen eine zweite Fluidladung unter Druck zu setzen, sobald der Druck in dem Fluidspeicher (72) unterhalb des Druckbereichs absinkt, so daß der Druckspeicher (72) die zweite Fluidladung speichert und der Fluiddruck im Fluidspeicher (72) im Druckbereich zur Vorbereitung des Formens eines anderen Gegenstandes verbleibt.

8. Spritzgießsystem nach Anspruch 7, bei dem die Fluidschaltmittel (12, 26, 28, 74, 76, 77, 78, 79) weitere Fluiddruckmindervorrichtungen (79) zum Herabsetzen des Fluiddrucks in der Form auf eine annehmbare Höhe umfassen, so daß sich der Gegenstand im Formhohlraum, ohne einzufallen verfestigen.

9. Spritzgießsystem nach Anspruch 8, bei dem die Fluidschaltmittel (12, 26, 28, 74, 76, 77, 78, 79) seine Fluidablaßvorrichtung (78) zum Ablassen des Fluids zur Umgebung umfassen.

10. Spritzgießsystem nach Anspruch 7, bei dem die Fluiddruckerzeugungsmittel (56, 58, 68, 70) eine Fluiddruckpumpe (58) zum Aufnehmen der ersten und zweiten Ladung umfassen.

11. Spritzgießsystem nach Anspruch 10, bei dem die Fluiddruckpumpe (58) ein Arbeitsgas zum Unterdrucksetzen der Fluidladungen beaufschlagt ist.

12. Spritzgießsystem nach Anspruch 11, bei dem die Steuermittel (66) den Druck in der Fluiddruckpumpe (58) in einer gesteuerten Reihenfolge regeln.

13. Spritzgießsystem nach Anspruch 7, bei dem wenigstens ein Teil (12, 26, 28) der Fluidschaltmittel (12, 26, 28, 74, 76, 77, 78 79) innerhalb der Form angeordnet ist.

14. Spritzgießsystem nach Anspruch 13, bei dem die Form einen Anguß 10 mit einer Einspritzöffnung (30) aufweist und bei dem die Fluidschaltmittel (12, 26, 28) im Anguß (10) enthalten sind.

15. Spritzgießsystem nach Anspruch 14, bei dem der Anguß (10) eine Buchse (12) mit der Öffnung (26) umfaßt und bei dem die Einspritzdüse (18) mit der Buchse (12) in Verbindung steht und das unter Druck gesetzte Fluid der Öffnung (3, 26) in der Buchse (12) zugeführt wird.

16. Spritzgießsystem nach Anspruch 15, bei dem die Öffnung (26) ausreichend klein bemessen ist, das sie dem Eindringen von geschmolzenen Kunststoff einen wesentlichen Widerstand entgegensetzt.

17. Spritzgießsystem nach einem oder mehreren der Ansprüche 7 bis 16 mit
- einer Mehrzahl von Spritzgießmaschinen (20), von denen jede eine Einspritzdüse (18) zum Einspritzen von geschmolzenen Kunststoff durch die Düse (18) aufweist;
- einer entsprechenden Mehrzahl von Formen, von denen jede eine Harzeinspritzöffnung (30) und einen Formhohlraum zur Aufnahme von geschmolzenem Kunststoff von der Düse (18) aufweist;
- Fluidschaltmitteln (12, 26, 28, 74, 74', 74'', 76, 77, 78, 79) zum Verbinden des Fluidspeichers (72) zu einer entsprechenden Mehrzahl von Öffnung (26), von denen jede mit ihrem entsprechenden Formhohlraum zum Einbringen des unter Druck gesetzten Fluids in die jeweilige Form gleichzeitig mit oder nach dem Einspritzen des Kunststoffs in Verbindung steht;
- einer entsprechenden Mehrzahl von Fluiddruckmindervorrichtungen (74, 74', 74''), die mit dem Fluidspeicher (72) zum Herabsetzen des Fluiddrucks von dem Fluidspeicher (72) auf eine annehmbare Höhe zum Formen von Gegenständen innerhalb ihrer jeweiligen Form verbunden sind und
- Steuermittel (66), die die Fluiddruckerzeugungsmittel (56, 58; 68, 70) veranlassen eine zweite Fluidladung unter Druck zu setzen, sobald der Druck in dem Fluidspeicher (72) unterhalb des Druckbereichs absinkt, so daß der Druckspeicher (72) die zweite Fluidladung speichert und der Fluiddruck im Fluidspeicher (72) im Druckbereich zur Vorbereitung des Formens eines anderen Gegenstandes verbleibt.

## Revendications

1. Procédé pour le moulage par injection d'articles en matière plastique, dans un système de moulage par injection, comprenant une buse d'injection de résine et un moule ayant une ouverture d'injection et une cavité de moule, pour loger une résine en fusion provenant de la bus, le procédé comprenant des étapes de :
(a) Pressurisation d'une recharge de fluide ;
(b) Stockage de la charge de fluide pressurisé dans un moyen de réservoir de fluide, à un niveau de pression compris dans une plage prédéterminée de pression ;
(c) Injection d'une quantité de matière plastique en fusion provenant de la buse d'injection, via l'ouverture d'injection et dans la cavité de moule ;
(d) Transfert du fluide pressurisé provenant du moyen de réservoir de fluide, à un orifice communiquant avec la cavité de moule, simultanément avec ou après l'étape d'injection ;
(e) Maintien du fluide sous pression dans le moule, jusqu'à ce que l'article ait durci dans la cavité de moule ;
(f) Mise à l'évent du fluide depuis le moule ;
(g) Répétition des étapes (c) à (f), jusqu'à ce que la pression régnant dans le moyen de réservoir de fluide chute en dessous de la plage de pression ; et
(h) Répétition des étapes (a) et (b), dès que la pression régnant dans le moyen de réservoir de fluide chute en dessous de la plage de pression, pour préparer le moulage d'un autre article, et, dans lequel le procédé comprend en outre l'étape de réduction de la pression du fluide provenant du moyen de réservoir de fluide à un niveau acceptable pour mouler les articles durant l'étape de transfert.

2. Procédé selon la revendication 2, dans lequel le fluide est un gaz.

3. Procédé selon la revendication 1, dans lequel le moule comprend une masselotte, la masselotte ayant l'ouverture d'injection et dans laquelle la charge de fluide pressurisé est introduite dans la cavité de moule, à partir de la masselotte.

4. Procédé selon la revendication 1, comprenant en outre l'étape de réduction de la pression du fluide dans le moule, à un niveau acceptable durant l'étape de maintien, de manière que l'article puisse durcir dans la cavité de moule, sans former d'affaissement.

5. Procédé selon la revendication 1 ou 4, dans lequel le fluide est mis à l'évent à partir de l'article, via le même orifice par lequel il a été introduit.

6. Procédé sel on la revendication 1, dans lequel l'étape de mise à l'évent comprend l'étape de séparation du moule et de la buse d'injection, après que la résine en fusion ait refroidi en dessous de son point de ramollissement.

7. Un système de moulage par injection d'articles en matière plastique comprenant :
une machine de moulage à injection (20) comprenant une buse d'injection (18) pour injecter une matière plastique en fusion via la buse ;
un moule ayant une ouverture d'injection de résine (30) et une cavité de moule, pour loger la matière plastique en fusion provenant de la buse ;
un moyen de chargement de fluide (56, 58 ; 68, 70) pour pressuriser des charges de fluide ;
un moyen de réservoir de fluide (72) pour stocker une première charge de fluide pressurisé à un niveau de pression compris dans une plage prédéterminée de pression ;
un moyen formant circuit de fluide (12, 26, 28, 74, 76, 77, 78, 79) interconnectant le moyen de réservoir (72) à un orifice (26), en communication avec la cavité de moule, pour introduire le fluide dans le moule simultanément avec ou après l'injection de matière plastique, dans lequel le moyen formanr circuit de fluide (12), (26), (28), (74), (76), (77), (78), (79) comprend au moins un moyen de réduction de fluide (74) pour réduire la pression du fluide provenant du moyen de réservoir de fluide (72), vers l'orifice (26), à un niveau acceptable pour mouler l'article ; et
un moyen de commande (66) pour forcer le moyen de chargement de fluide (56, 58 ; 68, 70) à pressuriser une deuxième charge de fluide, dès que la pression régnant dans le moyen de réservoir de fluide (72) chute au dessous de la plage de pression, le dit moyen de réservoir (72) stockant la deuxième charge de fluide, de manière que la pression du fluide contenu dans le moyen de réservoir de fluide (72) soit comprise dans la plage de pression pour préparer le moulage d'un autre article.

8. Système selon la revendication 7, dans lequel le moyen formant circuit de fluide (12, 26, 28, 74, 76, 77, 78, 79) comprend en outre un moyen de réduction de pression de fluide (79) pour réduire la pression du fluide contenu dans le moule, à un niveau acceptable, de manière que l'article puisse durcir dans la cavité de moule sans formation d'affaissement.

9. Système selon la revendication 8, dans lequel le moyen formant circuit de fluide (12, 26, 28, 74, 76, 77, 78, 79) comprend en outre un moyen d'évent de fluide (78) pour mettre à l'évent le fluide vers l'air ambiant.

10. Système selon la revendication 7, dans lequel la charge de fluide (56, 58, 68, 70) comprend un accélérateur de fluide (58) pour recevoir les premières et deuxièmes charges.

11. Système selon la revendication 10, dans lequel l'accélérateur de fluide (58) reçoit un gaz de travail pour pressuriser les charges de fluide.

12. Système selon la revendication 11, dans lequel le moyen de commande (66) régule la pression régnant dans l'accélérateur de fluide (58), selon une séquence contrôlée.

13. Système selon la revendication 7, dans lequel au moins une partie (12, 26, 28) du moyen formant circuit de fluide (12, 26, 28, 74, 76, 77, 78, 79) est contenue dans le moule.

14. Système selon la revendication 13, dans lequel le moule comprend une masselotte (10), la masselotte (10) ayant l'ouverture d'injection (30), et dans lequel le moyen formant circuit de fluide (12, 26, 28) est contenu dans la masselotte (10).

15. Système selon la revendication (14), dans lequel la masselotte (10) comprend un douille (12) ayant l'orifice (26) et, dans lequel la buse d'injection (18) communique avec la douille (12) et le fluide pressurisé est transféré vers l'orifice (3, 26) dans la douille (12).

16. Système selon la revendication (15), dans l'orifice (26) est dimensionné pour être suffisamment petit afin de résister pratiquement à toute entrée de matière plastique en fusion.

17. Système selon l'une ou plusieurs des revendications 7 à 16, comprenant :
une pluralité de machines de moulage à injection (20), chacune des machines (20) comprenant une buse d'injection (18) pour injecter une matière plastique en fusion via la buse (18) ;
une pluralité analogue de moules, chacun des moules ayant une ouverture d'injection de résine (30), une cavité de moule pour loger la matière plastique en fusion provenant de sa buse (18) ;
un moyen formant circuit de fluide (12, 26, 28, 74, 74' 74'', 76, 77, 78, 79) interconnectant le moyen de réservoir de fluide (72) à une pluralité analogue d'origines (26), chacun des orifices (26) étant en communication avec sa cavité de moule respective, pour introduire le fluide pressurisé dans son moule respectif, simultanément avec ou après l'injection de matière plastique ;
une pluralité analogue de moyens de réduction de pression de fluide (74, 74', 74'') connectés au moyen de réservoir de fluide (72), pour réduire la pression de fluide, provenant des moyens de réservoir de fluide (72), à un niveau acceptable pour mouler des articles dans son moule respectif ; et
un moyen de commande (56) pour forcer le moyen de changement de fluide (56, 58 ; 68, 70) à pressuriser la deuxième charge de fluide dès que la pression régnant dans le moyen de réservoir de fluide (72) chute en dessous de la plage de pression, le dit moyen de réservoir de fluide (72) stockant la deuxième charge de fluide, de manière que la pression de fluide régnant dans le moyen de réservoir de fluide (72) soit comprise dans la plage de pression permettant la préparation pour le moulage d'articles supplémentaires.
